# EUROPEAN PATENT APPLICATION

(11) **EP 0 633 156 A1**
(43) Date of publication of application: **11.01.1995**
(21) Application number: 94102836.7
(22) Date of filing: 24.02.1994
(51) Int. Cl.: B60L 7/22, B60L 11/18, B60L 7/12

(54) **Regeneration/power running control system for electric motor car**

(30) Priority: 06.07.1993 KR 9312670
(71) Applicant: SAMSUNG HEAVY INDUSTRY CO., LTD, Changwon-Shi, Kyung Nam (KR)
(72) Inventor: Kim, Jong-Kun, Changwon-Shi, Kyung Nam (KR); Lee, Chang-Soo, Changwon-Shi, Kyung Nam (KR)
(74) Representative: Bockhorni, Josef, Dipl.-Ing.

(57) **Abstract**

A regeneration/power running control system for an electric motor car includes a chopper transistor for a braking control; an electric motor including a field coil, an armature coil and an armature; means for controlling the quantity of current which flows from a power supply to the electric motor; a main control unit for controlling a whole system; a plurality of magnetic contactors for changing a polarity of the field coil and for changing the regeneration/power running, respectively; a regeneration diode; a flywheel diode for returning an energy stored in the electric motor to the power supply; a plugging diode for allowing a plugging current to flow to the armature coil only at a time of inverse power running state; means for detecting the quantity of current flowing through the armature coil; a plurality of microswitches for the forward and the backward running; a plurality of exciting coils for the maganatic contactors; and a plurality of transistors for changing regeneration/power running.

## Description

### BACKGROUND OF THE INVENTION

The present invention relates to a system for controlling a regenerating operation in an industrial electrical motor car employing a direct current motor, such as a battery driven fork lift truck, etc., and more particularly to an apparatus and a method for controlling a regenerating operation which charges the battery with an induced electromotive force generated by an armature of the direct current motor in the state of a power running mode.

Conventional industrial electric motor car has, running signal input means for receiving signals inputted from a running accelerator, unloading signal input means for receiving unloading signals, means for changing modes between regeneration and power running, means for discriminating a regenerable state, a control unit for outputting a predetermined signal in response to the signals inputted from each of the signal input means, and a magnetic contactor which is driven by the predetermined control signal outputted from the control means. Thus, a discriminating operation for control of regeneration mode has been performed.

In the prior art, upon operation of a running lever in the electric motor car, the control unit outputs a pulse signal with a predetermined period to a running switching element, allowing flow of an armature current when the pulse signal is turned on state and flow of a plugging current generated from the armature when it is turned off state.

In such a prior art, the control unit discriminates whether or not the plugging current exceeds a predetermined level during the generation of the predetermined number of the pulses(i.e., within a predetermined period), and when exceeding the level, it is considered to be a regenerable state, and then the regeneration control has been performed.

On the other hand, when the plugging current does not exceed the level within the predetermined discriminating period, it is considered to be a power running state, and then the power running control has been performed.

However, in the prior art, there was a disadvantage in that the control unit must be provided with separate plugging current detecting means to discriminate the regenerable state, resulting in complicated structure and high manufacturing cost.

Another disadvantages of the prior art is that the response performance and the arruracy of the discrimination are inferior.

### SUMMARY OF THE INVENTION

Accordingly, it is an object of the present invention to provide a regeneration/power running control system of which the accuracy of the discrimination and the response performance are enhanced.

In accordance with an aspect of this invention, there is provided a regeneration/power running control apparatus for an electric motor car comprising: a chopper transistor for a braking control; an electric motor including a field coil, an armature coil and an armature; means for controlling the quantity of current which flows from a power supply to the electric motor; a main control unit for controlling a whole system; a plurality of magnetic contactors for changing a polarity of the field coil and for changing the regeneration/power running, respectively; a regeneration diode; a flywheel diode for returning an energy stored in the electric motor to the power supply; a plugging diode for allowing a plugging current to flow to the armature coil only at a time of inverse power running state; means for detecting the quantity of current flowing through the armature coil; a plurality of microswitches for the forward and the backward running; a plurality of exciting coils for the maganatic contactors; and a pluiality of transistors for changing regeneration/power running.

In accordance with another aspect of this invention, there is provided a regeneration/power running control method comprising steps of receiving a forward/backward command signal and checking whether or not it is in an inverse power running signal for changing the rotating direction of the motor; changing a polarity of a field coil of the motor if it is in the inverse power running signal, and maintaining the present power running mode, if not; receiving a current command data which correspond to the forward/backward command signal, accumulating the data exceeding a regenerable minimum current value in a predetermined period, and calculating an average current command value out of the accumulated data; estimating the running speed of a ear based on the average current command value; controlling a chopping time of a chopper transistor in order for the quantity of a field current flowing through a field coil of the motor to be suitable to the running speed of the car; receiving a predetermined regeneration/power running discriminating signal and discriminating whether or not it is regenerable; performing a braking mode when the discriminating signal is regenerable and in the chopping time, a regenerating mode when the discriminating signal is regenerable and not in the chopping time, and the present power running mode when the discriminating signal is not regenerable; reading the regeneration/power running discriminating signal periodically in response to the chopping time and discriminating whether it is regenerable; and maintaining the regeneration/power running changing mode when the regeneration/power running discriminating signal is still regenerable and performing a normal power running mode when it is not regenerable.

### BRIEF DESCRIPTION OF THE DRAWINGS

FIG. 1 is a schematic circuit diagram of a control system in accordance with the present invention which is applicable to an electric fork lift.

FIG. 2 is a flow chart for explaining a control method of the system shown in FIG. 1.

### DETAILED DESCRIPTION OF THE INVENTION

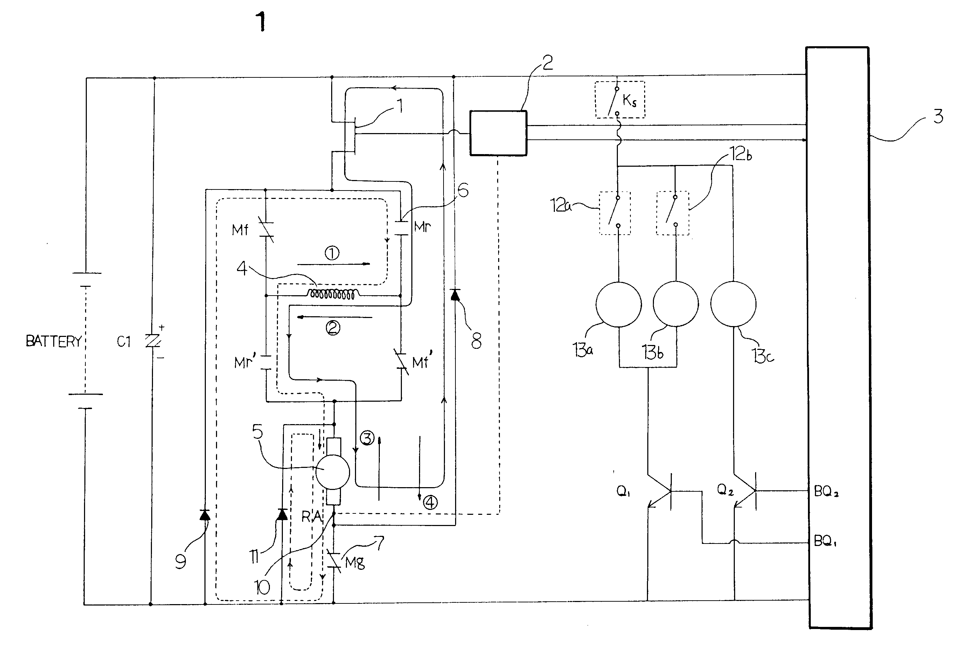

Referring to FIG. 1, the control system according to the present invention comprises a chopper transistor 1, a current control unit 2 for controlling the quantity of current which flows from a battery to a direct current motor(hereinafter, referred to as 'motor'), a main control unit 3 for controlling a whole system, a field coil 4 of the motor, an armature coil of the motor, magnetic contactor 6 for changing the polarity of the field coil 4, a regeneration/power running changing contactor 7, a regenerating diode 8, a flywheel diode 9 for returning the energy accumulated at the inductance of the motor to the battery, a current sensing unit 10 for detecting the quantity of current which flows through the armature coil 5, a plugging diode 11 allowing the plugging current to be passed only at time of the inverse power running, microswitches 12a and 12b used for a forward running and a backward running respectively, and exciting coils 13a, 13b and 13c for each of the magnetic contactors. The exciting coil 13a is for forward running contactors Mf and Mf', 13b for backward running contactors Mr, Mr', and 13c for regeneration/power running changing contactor 7.

The system of FIG. 1 further includes a key switch Ks for driving the exciting coils 13a, 13b and 13c, a running transistor Q1 and a regeneration/power running changing transistor Q2.

By way of the control system of the above, a changing process from the power running operation to the regeneration operation will be described in a case that a command is changed from the forward power running state to the backward power running state, for example.

As shown in FIG. 1, in the state of the forward power running, the contact of the forward contactors Mf and Mf' are closed, and the contact of the backward contactors Mr and Mr' are opened. Thus, a field current flowing through the field coil 4 flows in the direction shown by arrow 1 in FIG. 1, and a counter electromotive force generated in the armature coil 5 of the motor acts in the direction shown by arrow 3.

In this forward power running state, when a forward/backward running lever(not shown) is changed to the backward running state, the contact of the forward contactors Mf and Mf' are opened and the contact of the backward contactors Mr and Mr' are closed. Thus, the flowing direction of the field current is changed to the direction shown by arrow 2. At this time, however, since the armature still maintains the rotation of the forward power running state, the counter electromotive force induced in the armature coil 5 acts in the direction shown by arrow 4.

In addition, since the contact of the regeneration/power running changing contactor 7 is still in the state of being closed and thus the power running control pulse is still supplied from the main control unit 3 to the chopper transistor 1, a regeneration current is generated in the armature coil 5 due to the exciting current of the field coil 4.

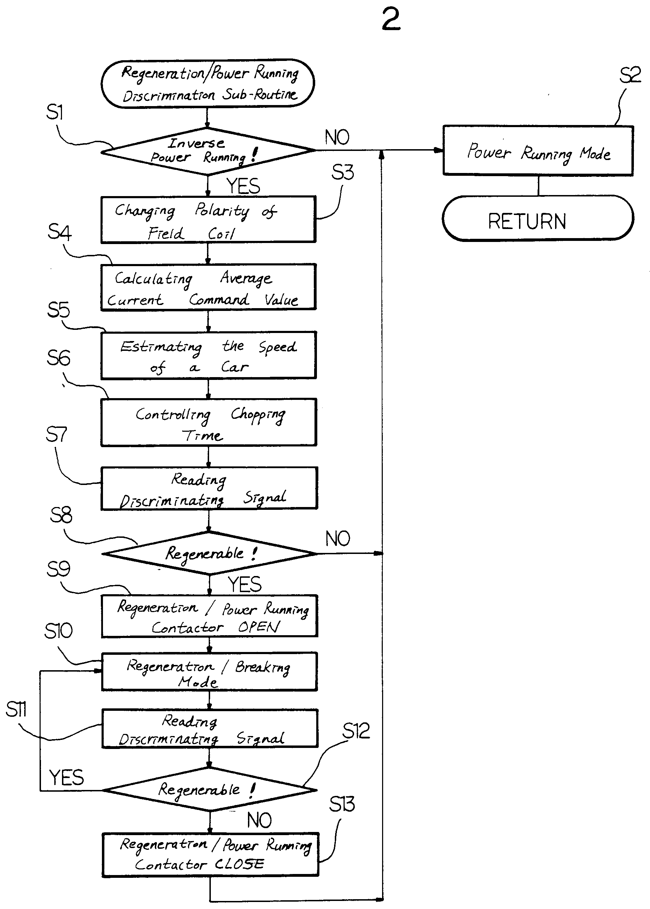

A process for performing the control of the corresponding mode by discriminating the regeneration mode and the power running mode will be described with reference to FIG. 2.

Initially, the main control unit 3 receives a forward/backward command signal provided from common running signal input means which output an electrical signal based on the slope of a running lever(not shown) and check whether or not it is an inverse power running signal for changing the rotational direction of the motor(step S1), if not, the present power running control is performed(step S2).

When the forward/backward command signal is the inverse power running signal(i.e., "YES" in step S1), the main control unit 3 outputs a high level signal from its output port BQ1. As a result, the running transistor Q1 is turned on, so that the contact of the magnetic contactor 6 is changed by the backward magnetic contactor 13b(i.e., the forward contactor Mf is opened and the backward contactor Mr is closed), thereby changing the polarity of the field coil 4(step S3).

Then, the main control unit 3 receives current command data which correspond to the forward/backward command signal inputted from the running signal input means depending on the slope of the running lever, accumulates the data exceeding a regenerable minimum current value in a predetermined period, and calculates an average current command value out of the accumulated data(step S4).

The main control unit 3 estimates the running speed of a car by using the average current command value acquired in step S4(step S5).

Then, the main control unit 3 supplies the current control unit 2 with a predetermined control signal according to the running speed of car estimated in step 5. The current control unit 2 controls the chopping time of the chopper transistor 1 in response to the predetermined control signal. Thus, the quantity of field current flowing through the field coil 4 for braking is controlled to be suitable to the running speed of a car(step S6).

By controlling the chopping time of the chopper transistor 1 based on the speed of a car, the braking current flows through a closed loop including the chopper transistor 1, the first backward contactor Mr, the field coil 4, the second backward contactor Mr', the armature coil 5 and the regeneration diode 8.

Meanwhile, the current control unit 2 receives a detecting signal fed from the current detecting unit 10 for detecting the quantity of plugging current which is induced from the armature coil 5 while the braking mode has been performed(i.e., while the chopper transistor 1 is in the state of being turned on), and discriminates whether or not it is regenerable. Then, the current control unit 2 sends the regeneration/power running discrimination signal to the main control unit 3.

That is, when the incremental quantity of the plugging current provided from the current detecting unit 10 exceeds a predetermined value, the current control unit 2 sends a regeneration/power running discriminating signal indicating a regenerable state to the main control unit 3. Then, the main control unit 3 reads the discriminating signal(step S7), and examines if it is in the regenerable state(step S8).

When it is in the regenerable state(i.e., 'NO' in step 8), the present power running mode is performed(step S2). When not regenerable(i.e., 'YES' in step 8), the main control unit 3 supplies the base BQ2 of the regeneration/power running changing transistor Q2 with a low level signal to make the chopper transistor 1 in the state of being turned off, preventing the flow of the current through the exciting coil 13c. At this time, the contact of the regeneration/power running contactor 7 is opened(step S9).

As a result, when the chopper transistor 1 is turned off, the current generated in the armature coil 5 is regenerated to the positive terminal of the battery through the flywheel diode 9, the backward running contactor Mr, the armature coil 5, the current detecting unit 10 and the regeneration diode 8(step S10).

Accordingly, when the chopper transistor 1 is in the state of being turned on, the operation of the braking mode is performed, and when it is in the state of being turned off, the operation of regenerating mode is performed. While the regeneration/brakin mode is performed, the main control unit 3 reads the regeneration power running discriminating signal from the current control unit 2 for the chopping time of the chopper transistor 1(step S11), and determines if it is regenerable(step S12). At this time, when it is still regenerable(i.e., 'YES' in step S12), the regeneration/power running change mode is performed(step S10), and if not(i.e., 'NO' in step S12), the changing transistor Q2 is turned on under the control of the main control unit 3, so that the contact of the regeneration/power running changing contactor 7 is closed to continue the power running control.

According to the present invention described in the above, a rapid discrimination of regeneration and power running can be aquired in an electrical motor car with a simple structure, and the current generated in the motor can be regenerated to the battery, or to be used as a power source for generating a braking torque. Therefore, a remarkable enhancement of the energy efficiency is acquired as well as a smooth braking response.

## Claims

1. A regeneration/power running control apparatus for an electric motor car comprising:
a chopper transistor for a braking control;
an electric motor including a field coil, an armature coil and an armature;
means for controlling the quantity of current which flows from a power supply to the electric motor;
a main control unit for controlling a whole system;
a plurality of magnetic contactors for changing a polarity of the field coil and for changing the regeneration/power running, respectively;
a regeneration diode;
a flywheel diode for returning an energy stored in the electric motor to the power supply;
a plugging diode for allowing a plugging current to flow to the armature coil only at a time of inverse power running state;
means for detecting the quantity of current flowing through the armature coil;
a plurality of microswitches for the forward and the backward running;
a plurality of exciting coils for the maganatic contactors; and
a plurality of transistors for changing regeneration/power running.

2. A regeneration/power running control method for an electric motor car comprising steps of:
receiving a forward/backward command signal and checking whether or not it is in an inverse power running signal for changing the rotating direction of the motor;
changing a polarity of a field coil of the motor if it is in the inverse power running signal, and maintaining the present power running mode, if not;
receiving a current command data which correspond to the forward/backward command signal, accumulating the data exceeding a regenerable minimum current value in a predetermined period, and calculating an average current command value out of the accumulated data;
estimating the running speed of a car based on the average current command value;
controlling a chopping time of a chopper transistor in order for the quantity of a field current flowing through a field coil of the motor to be suitable to the running speed of the car;
receiving a predetermined regeneration/power running discriminating signal and discriminating whether or not it is regenerable;
performing a braking mode when the discriminating signal is regenerable and in the chopping time, a regenerating mode when the discriminating signal is regenerable and not in the chopping time, and the present power running mode when the discriminating signal is not regenerable;
reading the regeneration/power running discriminating signal periodically in response to the chopping time and discriminating whether it is regenerable; and
maintaining the regeneration/power running changing mode when the regeneration/power running discriminating signal is still regenerable and performing a normal power running mode when it is not regenerable.
